# EUROPEAN PATENT APPLICATION

(11) **EP 2 665 160 A1**
(43) Date of publication of application: **20.11.2013**
(21) Application number: 12734585.8
(22) Date of filing: 11.01.2012
(51) Int. Cl.: H02K 7/116, B60L 11/14, B60L 15/20

(54) **DEVICE FOR TRANSMITTING DRIVING FORCE OF MOTORS**

(30) Priority: 11.01.2011 JP 2011003349; 17.02.2011 JP 2011032206; 30.03.2011 JP 2011073852; 24.11.2011 JP 2011256577; 21.12.2011 JP 2011280033
(71) Applicant: JTEKT Corporation, Osaka-shi, Osaka 542-8502 (JP)
(72) Inventor: ONOZAKI, Tohru, Osaka-shi Osaka 542-8502 (JP); KOBAYASHI, Tsune, Osaka-shi Osaka 542-8502 (JP); TAGAMI, Masaharu, Osaka-shi Osaka 542-8502 (JP); YAMAMORI, Motoyasu, Osaka-shi Osaka 542-8502 (JP); TAKUNO, Hiroshi, Osaka-shi Osaka 542-8502 (JP); SUZUKI, Kunihiko, Osaka-shi Osaka 542-8502 (JP); TAKAI, Tomoyoshi, Osaka-shi Osaka 542-8502 (JP); NOMURA, Keita, Osaka-shi Osaka 542-8502 (JP); SHIBATA, Hideki, Osaka-shi Osaka 542-8502 (JP)
(74) Representative: TBK
(86) International application number: PCT/JP2012/050385
(87) International publication number: WO 2012/096310

(57) **Abstract**

[Problem] To provide a device for transmitting the driving force of motors, the device being configured so that the dimension of the device body in the radial direction is reduced to make the device compact in the radial direction. [Solution] A device (1) for transmitting the driving force of motors comprises: the electric motors (3, 4) for generating driving force for operating a rear differential (107); and a speed reducing and transmitting mechanism (2) for reducing the speed of the driving force of the electric motors (3, 4) and transmitting the driving force to the rear differential (107). The speed reducing and transmitting mechanism (2) has: eccentric cams (6, 7) rotated by the drive of the electric motors (3, 4); and transmitting members (8, 9) rotated by the rotation of the eccentric cams (6, 7). The speed reducing and transmitting mechanism (2) is disposed around the outer periphery of the rear differential (107).

## Description

### Technical Field

The present invention relates to a motor driving force transmission device which is preferably used in an electric vehicle having, for example, an electric motor as a drive source.

### Background Art

In conventional motor driving force transmission devices, there are driving force transmission devices that include an electric motor which produces a motor driving force and a speed reduction and transmission mechanism for transmitting the motor driving force of the electric motor to a differential mechanism, which are installed in a motor vehicle (refer to Patent Literature 1, for example).

The electric motor has an output shaft that rotates based on electric power of an onboard battery and which is disposed on an axis of the speed reduction and transmission mechanism.

The speed reduction and transmission mechanism has a pair of speed reduction and transmission portions on the periphery of its axis and is disposed sideways of the differential mechanism, being connected to the electric motor and the differential mechanism (a differential case). One of the speed reduction and transmission portions is connected to the output shaft of the electric motor, and the other is connected to the differential case side.

In this configuration, the output shaft of the electric motor rotates based on the electric power of the onboard battery, and in association with the rotation of the electric motor, the motor driving force is transmitted from the electric motor to the differential mechanism via the speed reduction and transmission mechanism. Then, the motor driving force transmitted to the differential mechanism is delivered to left and right wheels from the differential mechanism.

### Prior Art Literature

### Patent Literature

Patent Literature 1: JP-A-2007-218407

### Summary of the Invention

### Problem that the Invention is to Solve

According to the motor driving force transmission device described in Patent Literature 1, however, the speed reduction and transmission mechanism is disposed on the axis which is parallel to the axis of the differential mechanism. As a result of this, a radial dimension of the whole device is increased, leading to a problem that the whole device is increased in size.

Consequently, an object of the invention is to provide a motor driving force transmission device which can reduce the radial dimension of the whole of the device to thereby realize a reduction in size in the radial direction of the device. Means for Solving the Problem

With a view to attaining the object, the invention provides a motor driving force transmission device which will be described under (1) to (9).

(1) There is provided a motor driving force transmission device comprising an electric motor which generates a motor driving force for operating a differential mechanism and a speed reduction and transmission mechanism which is configured to reduce speed of the motor driving force of the electric motor to transmit to the differential mechanism, wherein the speed reduction and transmission mechanism includes an eccentric cam which is configured to rotate as the electric motor is driven and a transmission member which is configured to rotate as the eccentric cam rotates, and the speed reduction and transmission mechanism is disposed on an outer circumference of the differential mechanism.

(2) In the motor driving force transmission device according to (1) above, the electric motor is disposed on the outer circumference of the differential mechanism.

(3) In the motor driving force transmission device according to (1) or (2) above, the electric motor includes a stator which is fixed to a device main body and a rotor which is configured to rotate around an outer circumference of the stator.

(4) In the motor driving force transmission device according to any of (1) to (3) above, the electric motor includes a first electric motor which is configured to produce a first motor driving force and a second electric motor which is connected to the first electric motor and is configured to produce a second motor driving force, the first electric motor and the second electric motor being connected to the differential mechanism via the speed reduction and transmission mechanism.

(5) In the motor driving force transmission device according to (4) above, in the speed reduction and transmission mechanism, the eccentric cam includes a plurality of eccentric cams which are configured to rotate as at least one of the first electric motor and the second electric motor is driven, and the transmission member includes a plurality of transmission members which are configured to rotate as the plurality of eccentric cams rotate.

(6) In the motor driving force transmission device according to (5) above, in the speed reduction and transmission mechanism, the plurality of transmission members are provided on the differential mechanism at portions which are spaced apart from each other at equal intervals around a rotational axis of the differential mechanism.

(7) In the motor driving force transmission device according to any of (1) to (6) above, in the speed reduction and transmission mechanism, the plurality of transmission member includes internal gears which are configured to mesh with an input member of the differential mechanism via external gears.

(8) In the motor driving force transmission device according to any of (1) to (7) above, in the speed reduction and transmission mechanism, the plurality of eccentric cams are disposed around an outer circumference of a portion of an outer circumferential portion of the input member of the differential mechanism, the portion having an outside diameter smaller than a largest outside diameter of the differential mechanism.

(9) In the motor driving force transmission device according to (8) above, in the speed reduction and transmission mechanism, the plurality of eccentric cams are a first eccentric cam which is positioned on one axial side of an axial central portion of the input member and a second eccentric cam which is positioned on the other axial side of the axial central portion of the input member, the first eccentric cam and the second eccentric cam being disposed in line in an axial direction of the input member.

### Advantage of the Invention

According to the invention, it is possible to reduce a radial dimension of the device main body, and hence, it is possible to realize a reduction in size of the device in a radial direction.

### Brief Description of the Drawings

Fig. 1 is a plan view shown to schematically illustrate a vehicle in which a motor driving force transmission device according to a first embodiment of the invention is installed.
Fig. 2 is a sectional view shown to illustrate the motor driving force transmission device according to the first embodiment of the invention.
Fig. 3 is a sectional view (a sectional view taken along the line A-A in Fig. 2) showing a speed reduction and transmission mechanism of the motor driving force transmission device according to the first embodiment of the invention.
Fig. 4 is a sectional view showing an operating state of the speed reduction and transmission mechanism of the motor driving force transmission device according to the first embodiment of the invention.
Fig. 5 is a sectional view shown to illustrate an electric motor of the motor driving force transmission device according to the first embodiment of the invention.
Fig. 6 is a block diagram shown to illustrate the motor driving force transmission device according to the first embodiment of the invention.
Fig. 7 is a sectional view showing a speed reduction and transmission mechanism of a motor driving force transmission device according to a second embodiment of the invention.
Fig. 8 is a sectional view showing an operating state of the speed reduction and transmission mechanism of the motor driving force transmission device according to the second embodiment.
Fig. 9 is a sectional view shown to illustrate a motor driving force transmission device according to a third embodiment of the invention.
Fig. 10 is a sectional view shown to illustrate a motor driving force transmission device according to a fourth embodiment of the invention.

### Mode for Carrying out the Invention

### [First Embodiment]

Hereinafter, a motor driving force transmission device according to a first embodiment of the invention will be described in detail by reference to the drawings.

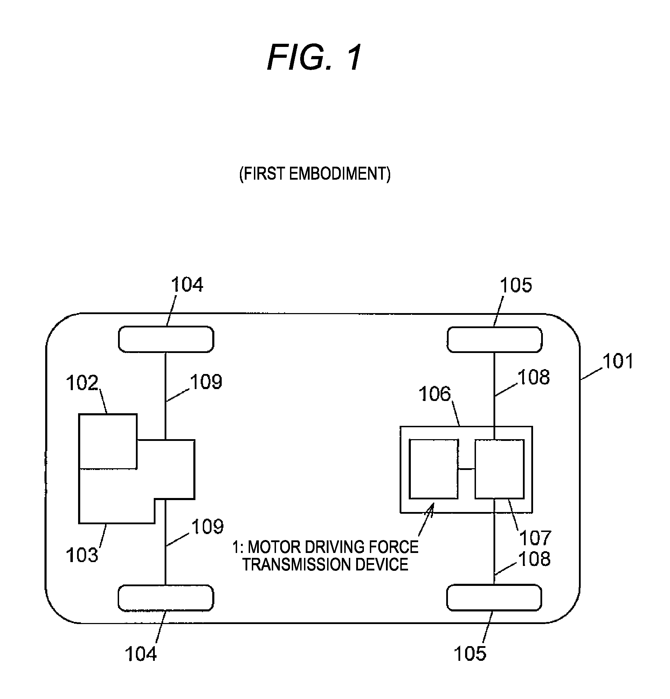

Fig. 1 shows schematically a four-wheel-drive vehicle. As shown in Fig. 1, a four-wheel-drive vehicle 101 employs a front drive line system related with front wheels which employs an engine as a drive source and a rear drive line system related with rear wheels which employs an electric motor as a drive source and includes a motor driving force transmission device 1, an engine 102, a transaxle 103, a pair of front wheels 104, and a pair of rear wheels 105.

The motor driving force transmission device 1 is disposed in the rear drive line system of the four-wheel-drive vehicle 101 and is supported together with a rear differential 107 on a vehicle body (not shown) of the four-wheel-drive vehicle 101 via a differential carrier (a device main body) 106.

Additionally, the motor driving force transmission device 1 is designed to transmit a motor driving force of an electric motor (which will be described later) to the pair of rear wheels 105. This configuration enables the motor driving force of the electric motor to be outputted to rear axle shafts 108 via the motor driving force transmission device 1 and the rear differential 107, whereby the pair of rear wheels 105 are driven. The motor driving force transmission device 1 will be described in detail later.

The engine 102 is disposed in the front drive line system of the four-wheel-drive vehicle 101. This configuration allows a driving force of the engine 102 to be outputted to front axle shafts 109 via the transaxle 103, whereby the pair of front wheels 104 are driven.

### (Overall Configuration of Motor Driving Force Transmission Device 1)

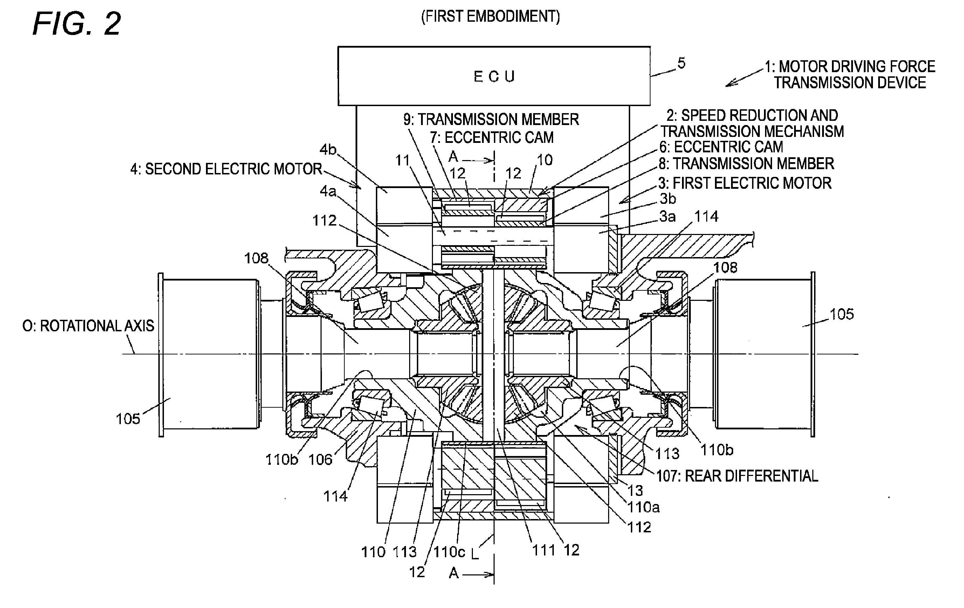

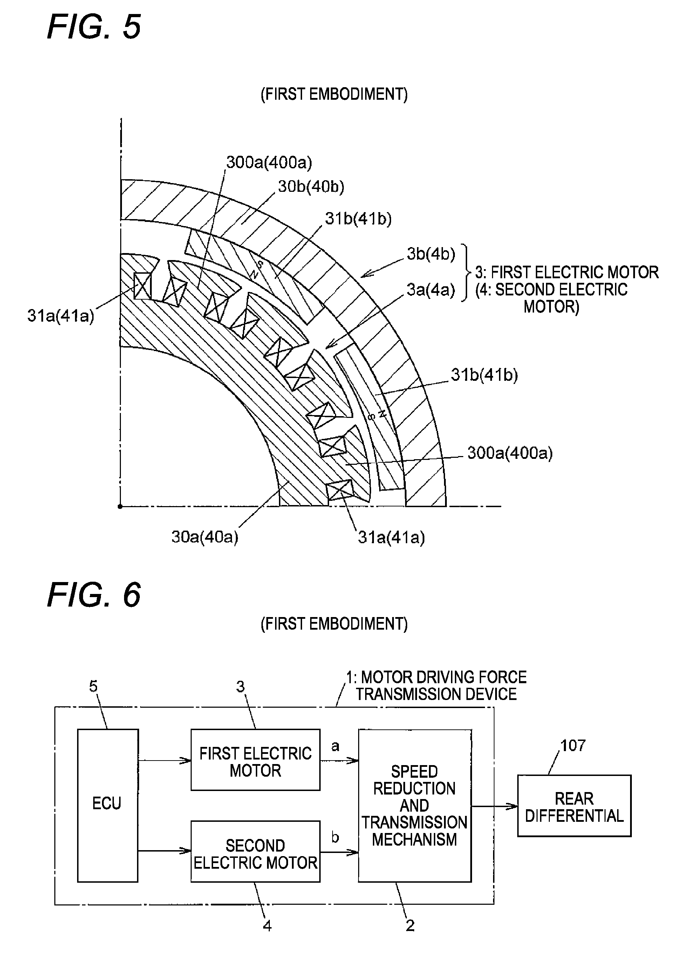

Fig. 2 shows the whole of the motor driving force transmission device. As shown in Fig. 2, the motor driving force transmission device 1 substantially includes a speed reduction and transmission mechanism 2 which reduces the speed of at least one motor driving force of a first motor driving force a and a second motor driving force b (both of which are shown in Fig. 6) and transmits it to the rear differential 107, a first electric motor 3 which produces the first motor driving force a, a second electric motor 4 which produces the second motor driving force b, and a vehicle ECU (Electronic Control Unit) 5 which functions as a control unit for outputting control signals which control the first electric motor 3 and the second electric motor 4.

The rear differential 107 is made up of a differential mechanism of a bevel gear type having a differential case (an input member) 110, a pinion gear shaft 111, a pair of pinion gears 112 and a pair of side gears 113 and is accommodated within the differential carrier 106.

By adopting this configuration, a rotational force of the differential case 110 is delivered from the pinion gear shaft 111 to the side gears 113 via the pinion gears 112 and is further transmitted to the left and right rear wheels 105 from the rear axle shafts 108.

On the other hand, when a driving resistance is produced between the left and right rear wheels 105, the rotational force of the differential case 110 is delivered to the left and right rear wheels 105 in a differential fashion as a result of spinning or rotating of the pinion gears 112.

The differential case 110 has an accommodating space 110a and shaft insertion holes 110b in an interior thereof and is disposed rotatably within the differential carrier 106 via tapered roller bearings 114. Additionally, the differential case 110 is designed to rotate around a rotational axis O when receiving at least one motor driving force of the first motor driving force a and the second motor driving force b. An external gear 110c is mounted on the differential case 110, which has an involute tooth profile and employs the rotational axis O as a gear axis thereof.

The pinion gear shaft 111 is disposed on an axis L which intersects the rotational axis O at right angles within the accommodating space 110a in the differential case 110 and is restricted from rotating around the axis L.

The pair of pinion gears 112 are supported rotatably on the pinion gear shaft 111 and are accommodated in the accommodating space 110a in the differential case 110.

The pair of side gears 113 are accommodated within the accommodating space 110a in the differential case 110 and are connected to the rear axle shafts 108 which pass through the shaft insertion holes 110b through spline fitting. Additionally, the pair of side gears 113 are disposed so that their gear axes intersect gear axes of the pair of pinion gears 112 at right angles so as to mesh with the pair of pinion gears 112.

### (Configuration of Speed Reduction and Transmission Mechanism 2)

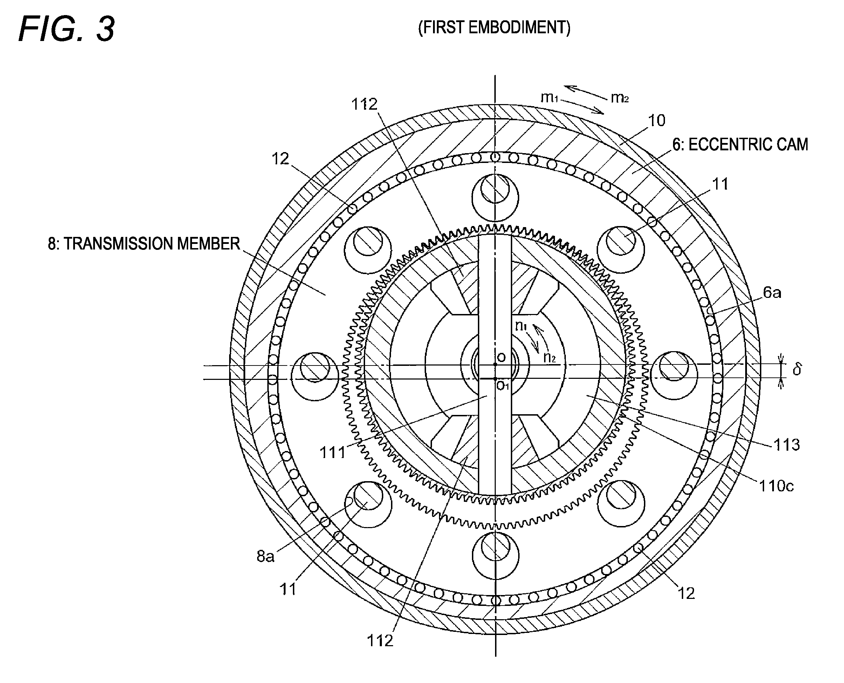

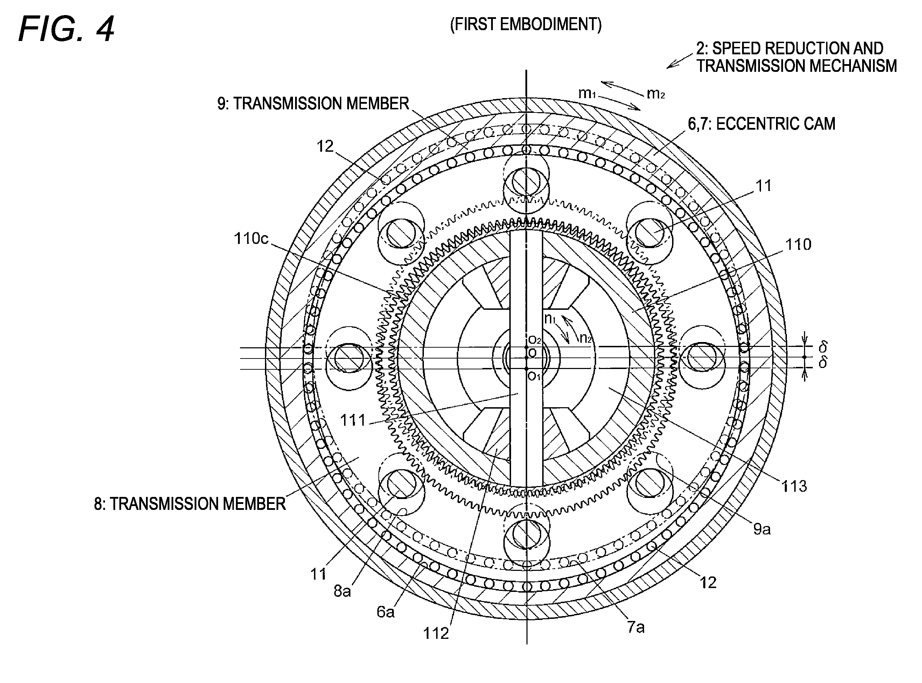

Figs. 3 and 4 show the speed reduction and transmission mechanism. As shown in Figs. 3 and 4, the speed reduction and transmission mechanism 2 has a pair of eccentric cams 6, 7 which rotate as at least one electric motor of the first electric motor 3 and the second electric motor 4 (both of which are shown in Fig. 2) is driven and a pair of transmission members 8, 9 which oscillate as the pair of eccentric cams 6, 7 rotate and is disposed on an outer circumference of the rear differential 107 while being interposed between the first electric motor 3 and the second electric motor 4 on the rotational axis O (shown in Fig. 2).

The pair of eccentric cams 6, 7 are disposed in line on the rotational axis O and are mounted on an inner circumferential surface of a second connecting member (a connecting cylinder) 10.

The eccentric cam 6, which is one of the pair of eccentric cams, has a through hole 6a which is centered at a point (an axis) O1 which deviates a deviation amount δ1 (δ1=δ) from a center (a point on the rotational axis O) thereof, and is disposed to face the first electric motor 3. The eccentric cam 6 is designed to cause the transmission member 8 to perform a circular motion which deviates a deviation amount δ from the rotational center O when receiving at least one motor driving force of the first motor driving force a and the second motor driving force b. When the eccentric cam 6 rotates in one circumferential direction (a direction indicated by an arrow m1), the transmission member 8 oscillates so that the axis O1 thereof moves in a direction indicated by an arrow n1 about the rotational axis O. When the eccentric cam 6 rotates in the other circumferential direction (a direction indicated by an arrow m2), the transmission member 8 oscillates so that the axis O1 thereof moves in a direction indicated by an arrow n2 (an opposite direction to the direction indicated by the arrow n1) about the rotational axis O. The transmission member 8 moves the axis O1 along a circumferential direction of a circle that is centered at the rotational axis O and which has a radius equal to the deviation amount δ and revolves without rotating one full rotation relative to the differential carrier (the device main body) 106.

The other eccentric cam 7 has a through hole 7a which is centered at a point (an axis) 02 which deviates a deviation amount δ2 (δ2=δ) from a center (a point on the rotational axis O) thereof, and is disposed to face the second electric motor 4. The other eccentric cam 7 is designed to cause the transmission member 9 to perform a circular motion which deviates the deviation amount δ from the rotational center O when receiving at least one motor driving force of the first motor driving force a and the second motor driving force b. When the eccentric cam 7 rotates in the one circumferential direction (the direction indicated by the arrow m1), the transmission member 9 oscillates so that the axis 02 thereof moves in the direction indicated by the arrow n1 about the rotational axis O. When the eccentric cam 7 rotates in the other circumferential direction (the direction indicated by the arrow m2), the transmission member 9 oscillates so that the axis 02 thereof moves in the direction indicated by the arrow n2 (the opposite direction to the direction indicated by the arrow n1) about the rotational axis O. The transmission member 9 moves the axis 02 along a circumferential direction of a circle that is centered at the rotational axis O and which has a radius equal to the deviation amount δ and revolves without rotating one full rotation relative to the differential carrier (the device main body) 106.

The one eccentric cam 6 and the other eccentric cam 7 are mounted on the inner circumferential surface of the second connecting member (the connecting tube) 10 so that a distance from the center point O1 of the through hole 6a to the rotational axis O and a distance from the center point 02 of the through hole 7a to the rotational axis O are equal and that circumferential distances of the pint O1 and the point 02 around the rotational axis O are equal.

The pair of transmission members 8, 9 are made up of internal gears which mesh with the external gear 110c of the differential case 110, are disposed along the rotational axis O and are provided on the external gear 110c at portions which are spaced apart from each other at equal intervals (180°) around the rotational axis (the rotational axis O) of the external gear 110c. By adopting this configuration, the speed reduction and transmission mechanism 2 is connected to the rear differential 107 in a well-balanced fashion. Internal gears having an involute tooth profile are employed for the pair of transmission members 8, 9 which have a larger number of teeth Z2 (for example, Z2=211) than the number of teeth Z1 (for example, Z1=198) of the external gear 110c and which are in mesh with the external gears 110c having the involute tooth profile at all times. A speed reduction ratio of the speed reduction and transmission mechanism 2 is calculated by diving (Z2-Z1) by Z2 or (Z2-Z1)/Z2.

The transmission member 8, which is one of the pair of transmission members, is disposed rotatably on an inner surface of the through hole 6a in the eccentric cam 6, which is one of the pair of eccentric cams, via a needle roller bearing 12. A plurality of pin insertion holes 8a are disposed in the transmission member 8 at equal intervals in a circumferential direction thereof so that a plurality of first connecting members (connecting pins) 11 are inserted therethrough, each pin insertion hole 8a having a bore diameter which is larger than a dimension resulting from adding the deviation amount δ to a pin diameter of each connecting pin 11.

The transmission member 9, which is the other of the pair of transmission members, is disposed rotatably on an inner surface of the through hole 7a in the eccentric cam 7, which is the other of the pair of eccentric cams, via a needle roller bearing 12. Similarly to the transmission member 8, a plurality of pin insertion holes 9a are disposed in the other transmission member 9 at equal intervals in a circumferential direction thereof so that the plurality of connecting pins 11 are inserted therethrough, each pin insertion hole 9a having a bore diameter which is larger than the dimension resulting from adding the deviation amount δ to the pin diameter of each connecting pin 11.

### (Configuration of First Electric Motor 3)

Fig. 5 shows the electric motor. Fig. 6 shows a control system of the speed reduction and transmission mechanism. As shown in Figs. 5 and 6, the first electric motor 3 has a stator 3a and a rotor 3b and is connected to the rear differential 107 via the speed reduction and transmission mechanism 2 on the rotational axis O (shown in Fig. 2), and the stator 3a is connected to the ECU 5. Additionally, the first electric motor 3 is configured so that when a control signal is inputted thereinto from the ECU 5, the stator 3a produces the first motor driving force a for operating the rear differential 107 between the rotor 3b and itself so as to rotate the rotor 3b.

The stator 3a has a stator core 30a and coils 31a, is disposed on an inner circumferential side of the first electric motor 3 and is fixed to the differential carrier 106 (shown in Fig. 2).

The stator core 30a includes, for example, a plurality of silicon steel plates which are laminated one on the top of the other and is made up of a cylindrical member as a whole. A plurality of (20 in this embodiment) tees 300a are provided side by side in a circumferential direction at equal intervals on an outer circumferential surface of the stator core 30a.

The coil 31a is made up of an electric wire which is supplied with electric power from an onboard battery (not shown) and is wound around the tee 300a of the stator core 30a.

The rotor 3b has a rotor core 30b and segment magnets 31b and is disposed on an outer circumferential side of the first electric motor 3.

The rotor core 30b includes, for example, a plurality of silicon steel plates which are laminated one on the top of the other and is made up of a cylindrical member as a whole.

The segment magnets 31b include a plurality of (four in this embodiment) permanent magnets which are magnetized to an N pole and an S pole from a rotor radial inner side towards a rotor radial outer side and a plurality of (four in this embodiment) permanent magnets which are magnetized to an N pole and an S pole from a rotor radial outer side towards a rotor radial inner side. These permanent magnets of the two types are aligned alternately side by side in the circumferential direction and are bonded to an inner circumferential surface of the rotor core 30b at equal intervals.

### (Configuration of Second Electric Motor 4)

The second electric motor 4 has a stator 4a and a rotor 4b and is connected to the rear differential 107 via the speed reduction and transmission mechanism 2 on the rotational axis O (shown in Fig. 2), and the stator 4a is connected to the ECU 5. Additionally, the second electric motor 4 is configured so that when a control signal is inputted thereinto from the ECU 5, the stator 4a produces the second motor driving force b for operating the rear differential 107 between the rotor 4b and itself so as to rotate the rotor 4b.

The stator 4a has a stator core 40a and coils 41a, is disposed on an inner circumferential side of the second electric motor 4 and is fixed to the differential carrier 106. In addition, the stator 4a is connected to the stator 3a of the first electric motor 3 via a plurality of connecting pins 11. The stator 4a is mounted together with the stator 3a on the differential carrier 106 (shown in Fig. 2) with nuts 13 (shown in Fig. 2).

The stator core 40a includes, for example, a plurality of silicon steel plates which are laminated one on the top of the other and is made up of a cylindrical member as a whole. A plurality of (20 in this embodiment) tees 400a are provided side by side in a circumferential direction at equal intervals on an outer circumferential surface of the stator core 40a.

The coil 41a is made up of an electric wire which is supplied with electric power from the onboard battery (not shown) and is wound around the tee 400a of the stator core 40a.

The rotor 4b has a rotor core 40b and segment magnets 41b, is disposed on an outer circumferential side of the second electric motor 4, and is connected to the rotor 3b of the first electric motor 3 via a connecting cylinder 10.

The rotor core 40b includes, for example, a plurality of silicon steel plates which are laminated one on the top of the other and is made up of a cylindrical member as a whole.

The segment magnets 41b include a plurality of (four in this embodiment) permanent magnets which are magnetized to an N pole and an S pole from a rotor radial inner side towards a rotor radial outer side and a plurality of (four in this embodiment) permanent magnets which are magnetized to an N pole and an S pole from a rotor radial outer side towards a rotor radial inner side. These permanent magnets of the two types are aligned alternately side by side in the circumferential direction and are bonded to an inner circumferential surface of the rotor core 40b at equal intervals.

### (Configuration of ECU 5)

The ECU 5 is connected to a sensor (not shown) in addition to the first electric motor 3 and the second electric motor 4. Additionally, when a detection signal is inputted thereinto which signals that a driving torque which is smaller than a predetermined torque is required for the rear differential 107, the ECU 5 outputs a control signal to drive alternately the first electric motor 3 and the second electric motor 4, while the detection signal signals that a driving torque which is equal to or larger than the predetermined torque is required for the rear differential 107, the ECU 5 outputs a control signal to drive both the first electric motor 3 and the second electric motor 4.

By adopting this configuration, the ECU 5 puts the four-wheel-drive vehicle 101 in a four-wheel-drive state based on the front drive line system and the rear drive line system by not only operating the rear drive line system by driving at least one electric motor of the first electric motor 3 and the second electric motor 4 but also driving the front wheels 104 by the engine 102.

In addition, while the four-wheel-drive vehicle 101 is running normally, the ECU 5 puts the four-wheel-drive vehicle 101 in a two-wheel-drive state by stopping the operation of the rear drive line system by stopping the driving of the first electric motor 3 and the second electric motor 4 while allowing the engine 102 to drive the front wheels 104.

### (Operation of Motor Driving Force Transmission Device 3=1)

Next, the operation of the motor driving force transmission device 1 illustrated in this embodiment will be described by using Figs. 1 to 4 and 6.

In Fig. 2, when, by supplying electric power to one electric motor of the first electric motor 3 and the second electric motor 4 (for example, the first electric motor 3) of the four-wheel-drive vehicle 101 (shown in Fig. 1), the first electric motor 3 is driven, the first motor driving force a (shown in Fig. 6) of this first electric motor 3 is imparted to the speed reduction and transmission mechanism 2 via the connecting cylinder 10, whereby the speed reduction and transmission mechanism 2 is actuated.

Because of this, in the speed reduction and transmission mechanism 2, as shown in Figs. 3 and 4, the eccentric cams 6, 7 rotate, for example, in the direction indicated by the arrow m1, and the transmission members 8, 9 perform circular motions in the direction indicated by the arrow n1 while sliding on each other with the transmission members 8, 9 each deviating the deviation amount δ from the rotation axis O.

In conjunction with this, the first motor driving force a is transmitted from the transmission members 8, 9 to the external gear 110c of the rear differential 107 (shown in Fig. 1), whereby the external gear 110c rotates in the opposite direction (the direction indicated by the arrow m2) to the rotating direction of the eccentric cams 6, 7.

This actuates the rear differential 107, and the first motor driving force a is delivered to the rear axle shafts 108 to thereby be transmitted to the left and right rear wheels 105.

Here, to allow the motor driving force transmission device 1 to continue to operate when the driving torque which is smaller than the predetermined torque is required for the rear differential 107, when a predetermined period of time during which the first electric motor 3 is to be driven continuously elapses, the supply of electric power to the first driving motor 3 is stopped, and the second electric motor 4, which is the other electric motor, is driven. This is because the first electric motor 3 is heated excessively in case the supply of electric power to the first electric motor 3 still continues even after the predetermined period of time elapses. Thus, the first electric motor 3 is prevented from being heated excessively by stopping the supply of electric power to the first electric motor 3.

Then, when the second electric motor 4 is driven by supply electric power to the second electric motor 4, the second motor driving force b (shown in Fig. 6a) of the second electric motor 4 is imparted to the speed reduction and transmission mechanism 2 via the connecting cylinder 10, whereby the speed reduction and transmission mechanism 2 is actuated. Because of this, in a similar way to the way in which the first electric motor 3 is driven, the second motor driving force b is transmitted to the rear differential 107 via the speed reduction and transmission mechanism 2. This actuates the rear differential 107, and the second motor driving force b is delivered to the rear axle shafts 108 to thereby be transmitted to the left and right rear wheels 105.

Here, to allow the motor driving force transmission device 1 to continue to operate when the driving torque which is smaller than the predetermined torque is required for the rear differential 107, when a predetermined period of time during which the second electric motor 4 is to be driven continuously elapses, the supply of electric power to the second driving motor 4 is stopped, and the first electric motor 3 is driven.

In this way, the first electric motor 3 and the second electric motor 4 are driven alternately to thereby restrain the first electric motor 3 and the second electric motor 4 from being heated excessively, thereby making it possible to allow the motor driving force transmission device 1 to operate continuously.

In the motor driving force transmission device 1 configured in the way described heretofore, since the speed reduction and transmission mechanism 2, the first electric motor 3 and the second electric motor 4 are disposed on the outer circumference of the rear differential 107, it is possible to reduce the axial and radial dimensions of the motor driving force transmission device 1.

In this embodiment, since the rotation of the first electric motor 3 and the second electric motor 4 is transmitted to the rear wheels 105 while being reduced in speed by the speed reduction and transmission mechanism 2, even in the event that low torque electric motors are used as the first electric motor 3 and the second electric motor 4, it is possible to transmit a relatively large torque to the rear wheels 105. As this occurs, since the rotor 3b and the rotor 4b are disposed on the outer circumference of the stator 3a and the stator 4a, respectively, it is possible to transmit a larger torque to the rear wheels 105 than when the rotors are disposed on an inner circumference of the stators.

Additionally, in this embodiment, since the segment magnets 31b of the rotor 3b are bonded to the inner circumferential surface of the rotor core 30b and the segment magnets 41b of the rotor 4b are bonded to the inner circumferential surface of the rotor core 40b, there is no such situation that a force is applied to the segment magnets 31, 41b that is produced as a result of a centrifugal force being produced by the rotation of the rotors 3b, 4b and which attempts to separate the segment magnets 31b, 41b from the corresponding rotor cores 30b, 40b.

In the embodiment, while the motor driving force transmission device 1 is described as being actuated by rotating the eccentric cams 6, 7 in the direction indicated by the arrow m1, the motor driving force transmission device 1 can also be actuated in a similar way to the way described in this embodiment even by rotating the eccentric cams 6, 7 in the direction indicated by the arrow m2. As this occurs, the external gear 110c rotates in the opposite direction (the direction indicated by the arrow m1) to the rotating direction of the eccentric cams 6, 7.

In addition, while the first motor driving force a or the second motor driving force b is described as being transmitted from the speed reduction and transmission mechanism 2 to the rear differential 107, the invention is not limited thereto. When the torque which is equal to or larger than the predetermined torque is required for the rear differential 107, it is possible to transmit a motor driving force which is larger than the first motor driving force a and the second motor driving force b from the speed reduction and transmission mechanism 2 to the rear differential 107 by driving both the first electric motor 3 and the second electric motor 4.

### [Advantage of First Embodiment]

According to the first embodiment that has been described heretofore, the following advantages can be obtained.

(1) The speed reduction and transmission mechanism 2, the first electric motor 3 and the second electric motor 4 are disposed on the outer circumference of the rear differential 107, whereby the axial and radial dimensions of the motor driving force transmission device 1 (the device main body) can be reduced, thereby making it possible to realize a reduction in size of the device as a whole.

(2) Since the rotor 3b of the first electric motor 3 is disposed on the outer circumference of the stator 3a thereof and the rotor 4b of the second electric motor 4 is disposed on the outer circumference of the stator 4a thereof, it is possible to produce a larger motor driving force than when the rotors are disposed on the inner circumference of the stators.

(3) The motor driving force transmission device 1 can be used continuously by employing alternately the first electric motor 3 and the second electric motor 4, whereby the first electric motor 3 and the second electric motor 4 are restrained from generating heat excessively even when the motor driving force transmission device 1 is operated continuously over a long period of time.

### [Second Embodiment]

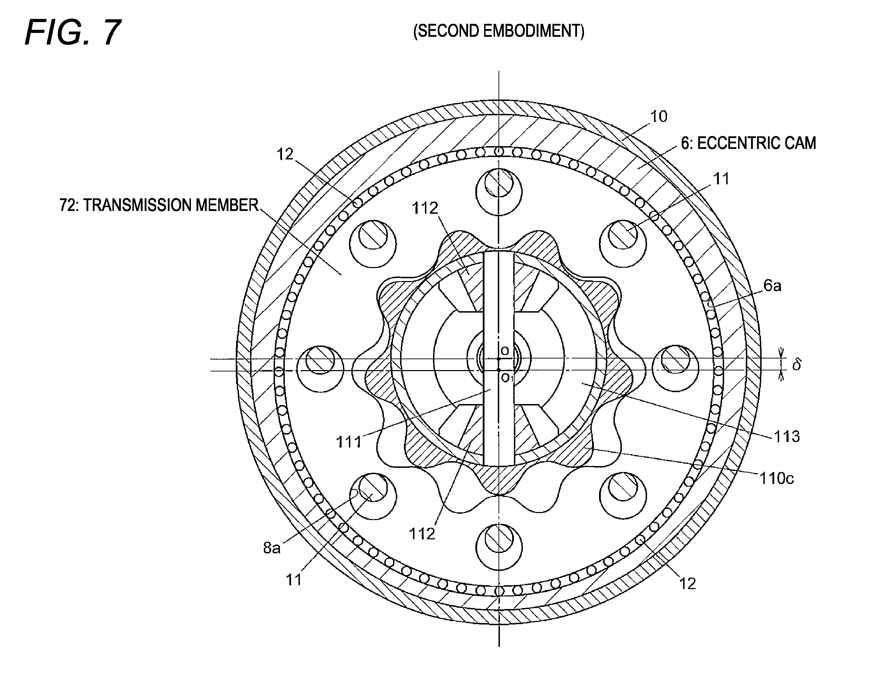

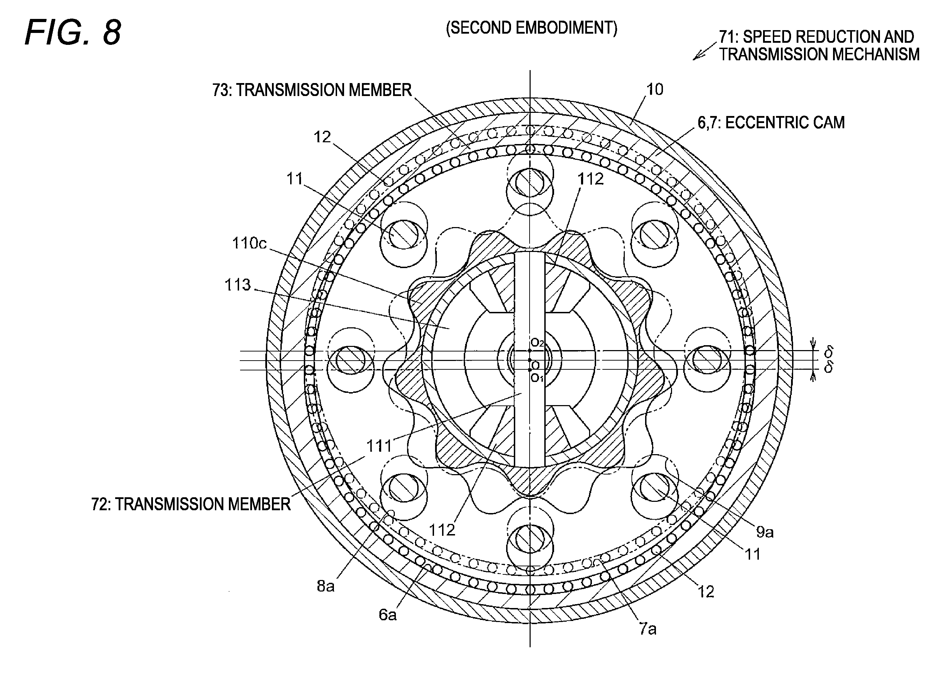

Next, a motor driving force transmission device according to a second embodiment of the invention will be described by using Figs. 7 and 8. Figs. 7 and 8 show a speed reduction and transmission mechanism. In Figs. 7 and 8, like reference numerals will be given to members which have the same or similar functions to those shown in Figs. 3 and 4, and the detailed description thereof will be omitted here.

As shown in Figs. 7 and 8, a speed reduction and transmission mechanism 71 of a motor driving force transmission device according to the second embodiment of the invention is characterized in that a pair of transmission members 72, 73 are formed of internal gears having a cycloid tooth profile.

Because of this, an external gear 110c of a differential case 110 of a rear differential 107 is formed of an external gear having a cycloid tooth profile that has a smaller number of teeth than those of the pair of transmission members 72, 73 and which is normally in mesh with the pair of transmission members 72, 73.

Additionally, the pair of transmission members 72, 73 are disposed along a rotational axis O (shown in Fig. 2) and are connected to the external gear 110c at portions which are spaced 180° apart from each other around the rotational axis (the rotational axis O) thereof.

In the motor driving force transmission device configured in the way described above, similar to the motor driving force transmission device 1 described in the first embodiment, the speed reduction and transmission mechanism 2, a first electric motor 3 and a second electric motor 4 are disposed on an outer circumference of the rear differential 107, and therefore, it is possible to reduce an axial and radial dimensions of the motor driving force transmission device 1.

### [Advantage of the Second Embodiment]

According to the second embodiment that has been described above, a similar advantage to the advantage of the first embodiment can be obtained.

### [Third Embodiment]

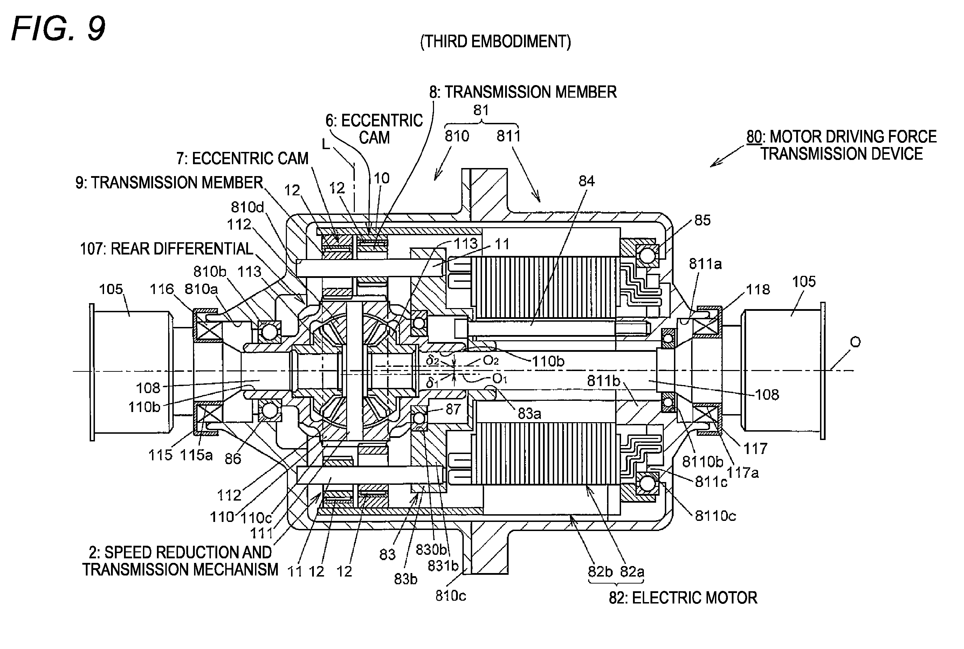

Next, a motor driving force transmission device according to a third embodiment of the invention will be described by using Fig. 9. Fig. 9 shows a motor driving force transmission device. In Fig. 9, like reference numerals will be given to members which have the same or like functions to those shown in Fig. 2, and the detailed description thereof will be omitted here.

As shown in Fig. 9, a motor driving force transmission device 80 according to the third embodiment of the invention is characterized by including a housing 81 of which a rotational axis O is an axis of rear axle shafts 108, a rear differential 107 which delivers a motor driving force to rear wheels 105, an electric motor 82 which generates a motor driving force for operating the rear differential 107 and a speed reduction and transmission mechanism 2 which reduces the speed of the driving force of the electric motor 82 to transmit it to the rear differential 107, with the speed reduction and transmission mechanism 2 disposed on the same axis as an axis of the electric motor 82 (the rotational axis O).

It should be noted that since the electric motor 82 is substantially the same in configuration as the first electric motor 3 and the second electric motor 4 which are described in the first embodiment, corresponding reference numerals will be given to portions corresponding to the portions of, for example, the first electric motor 3 (reference numerals 82a and 82b will be given to a stator of the electric motor 82 and a rotor of the electric motor 82, respectively, so as to correspond to the stator 3a and the rotor 3b of the first electric motor 3).

In addition, one side end portion and the other side end portion of a differential case 110 is supported rotatably on a bearing mounting portion 810b of a first housing element 810 via a ball bearing 86 and on a bearing mounting portion 830b of a stator supporting member 83 via a ball bearing 87, respectively.

The housing 81 has the first housing element 810 which accommodates the rear differential 107 and the speed reduction and transmission mechanism 2 and a second housing element 811 that communicates with the first housing element 810 and accommodates the electric motor 82 (except some parts) and which is disposed on a vehicle body.

The first housing element 810 is disposed at one side of the housing 81 and is formed of a stepped and bottomed cylindrical member which is opened in a side which faces the second housing element 811 as a whole. A shaft insertion hole 810a is provided in a bottom portion of the first housing element 810, allowing the rear axle shaft 108 to be inserted therethrough.

A cover 115 which covers an opening portion in the shaft insertion hole 810a is interposed between one of the rear wheels 105 and the shaft insertion hole 810a. The cover 115 has a cylindrical portion 115a through which the rear axle shaft 108 is inserted, and an inner circumferential surface of the cylindrical portion 115a is attached to an outer circumferential surface of the rear axle shaft 108. A seal member 116 which seals up the opening portion in the shaft insertion hole 810a is attached to an inner circumferential surface of the shaft insertion hole 810a. In addition, a differential case bearing mounting portion 810b is provided on the inner circumferential surface of the shaft insertion hole 810a.

An attaching flange 810c is provided integrally at an opening end portion of the first housing element 810 so as to project from an outer circumferential surface thereof. A plurality of (six in this embodiment) pin mounting holes 810d are arranged at equal intervals around the rotational axis O in the first housing element 810 so that connecting pins 11 are mounted therein.

The second housing element 811 is disposed at the other side of the housing 81 and is formed of a bottomed cylindrical member which is opened in a side which faces the first housing element 810 as a whole. A shaft insertion hole 811a through which the rear axle shaft 108 is inserted is provided in a bottom portion of the second housing element 811.

A cover 117 which covers an opening portion in the shaft insertion hole 811a is interposed between the other of the rear wheels 105 and the shaft insertion hole 811a. The cover 117 has a cylindrical portion 117a through which the rear axle shaft 108 is inserted, and an inner circumferential surface of the cylindrical portion 117a is attached to an outer circumferential surface of the rear axle shaft 108. A seal member 118 which seals up the opening portion in the shaft insertion hole 811a is attached to an inner circumferential surface of the shaft insertion hole 811a.

In addition, a first rising portion 811b and a second rising portion 811c are provided integrally on a bottom portion of the second housing element 811 so that the first rising portion 811b projects therefrom at an inner opening circumferential edge of the shaft insertion hole 811a and that the second rising portion 811c projects therefrom in a position lying radially outwards of the first rising portion 811b. The cylindrical stator supporting portion 83, which faces oppositely the bottom portion of the second housing element 811 across the electric motor 82, is attached together with the stator 82a of the electric motor 82 to the first rising portion 811b with attaching bolts 84.

The stator supporting member 83 has a shaft insertion hole 83a through which the rear axle shaft 108 is inserted and is interposed between the electric motor 82 and the speed reduction and transmission mechanism 2. A flange 83b is provided integrally on an outer circumferential surface of the stator supporting member 83 so as to project therefrom. A differential case bearing mounting portion 830b is provided on an inner circumferential surface of the flange 83b. A plurality of (six in this embodiment) pin mounting holes 831b are provided in the flange 83b so that connecting pins 11 are mounted therein.

A shaft bearing mounting portion 811b and a rotor bearing mounting portion 8110c are provided on an inner circumferential surface of the first rising portion 811b and on an outer circumferential surface of the second rising portion 811c, respectively.

The electric motor 82 is made up of an outer rotor motor which includes the stator 82a and the rotor 82b and is connected to the rear differential 107 via the speed reduction and transmission mechanism 2 on the motor axis (the rotational axis O), and the stator 82a is connected to an ECU 5 (shown in Figs. 2 and 5). Then, in the electric motor 82, when a control signal is inputted into the stator 82a from the ECU 5, a motor driving force which operates the rear differential 107 is generated between the stator 82a and the rotor 82b so as to rotate the rotor 82b.

The stator 82a is disposed on an inner circumferential side of the electric motor 82 and is attached together with the stator supporting member 83 to the first rising portion 811b of the second housing element 811 with the attaching bolts 84.

The rotor 82b is disposed on an outer circumferential side of the electric motor 82 and is supported rotatably on a rotor bearing mounting portion 8110c on the second rising portion 811c via a bearing 85.

The speed reduction and transmission mechanism 2 has a pair of eccentric cams 6, 7 which are driven to rotate by the electric motor 82 and a pair of transmission members 8, 9 which oscillate in association with the rotation of the pair of eccentric cams 6, 7 and is disposed on an outer circumference of the rear differential 107 on the same axis as an axis of the electric motor 82 (the rotational axis O).

When the eccentric cam 6 rotates in one circumferential direction (the direction indicated by the arrow m1), the transmission member 8 oscillates so that an axis O1 thereof moves in the direction indicated by the arrow n1 about the rotational axis O. When the eccentric cam 6 rotates in the other circumferential direction (the direction indicated by the arrow m2), the transmission member 8 oscillates so that the axis O1 thereof moves in the direction indicated by the arrow n2 (the opposite direction to the direction indicated by the arrow n1) about the rotational axis O. The transmission member 8 moves the axis O1 along a circumferential direction of a circle that is centered at the rotational axis O and which has a radius equal to a deviation amount δ and revolves without rotating one full rotation relative to the housing (a device main body) 81.

When the eccentric cam 7 rotates in the one circumferential direction (the direction indicated by the arrow m1), the transmission member 9 oscillates so that an axis 02 thereof moves in the direction indicated by the arrow n1 about the rotational axis O. When the eccentric cam 7 rotates in the other circumferential direction (the direction indicated by the arrow m2), the transmission member 9 oscillates so that the axis 02 thereof moves in the direction indicated by the arrow n2 (the opposite direction to the direction indicated by the arrow n1) about the rotational axis O. The transmission member 9 moves the axis 02 along a circumferential direction of a circle that is centered at the rotational axis O and which has a radius equal to a deviation amount δ and revolves without rotating one full rotation relative to the housing (the device main body) 81.

In the motor driving force transmission device 80 which is configured in this way, when the electric motor 82 is driven by supplying electric power to the electric motor 82, the motor driving force of the electric motor 82 is imparted to the speed reduction and transmission mechanism 2 via a connecting cylinder 10, whereby the speed reduction and transmission mechanism 2 operates in a similar way to the way in which the motor driving force transmission device 1 described in the first embodiment operates.

### [Advantage of the Third Embodiment]

According to the third embodiment that has been described heretofore, the following advantages will be obtained.

(1) The radial dimension of the motor driving force transmission device 1 (the device main body) can be reduced by disposing the speed reduction and transmission mechanism 2 on the outer circumference of the electric motor 8, thereby making it possible to realize a reduction in size of the device in the radial direction thereof.

(2) Since the rotor 82b is disposed on the outer circumference of the stator 82a of the electric motor 82, when compared with a case where the rotor is disposed on an inner circumference of the stator, a larger motor driving force can be produced.

### [Fourth Embodiment]

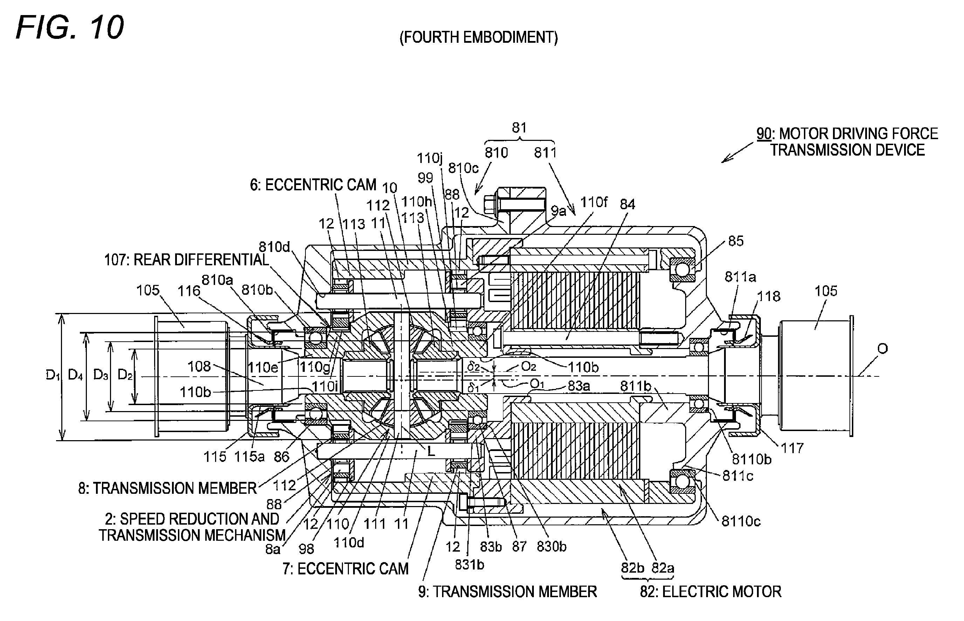

Next, a motor driving force transmission device according to a fourth embodiment will be described by using Fig. 10. Fig. 10 shows a motor driving force transmission device. In Fig. 10, like reference numerals will be given to members having functions like or similar to those of the members shown in Fig. 9, and the detailed description thereof will be omitted here.

As shown in Fig. 10, a motor driving force transmission device 90 according to the fourth embodiment of the invention is characterized in that eccentric cams 6, 7 are disposed on outer circumferences of portions 110g, 110h which lie on an outer circumferential portion of a differential case (an input member) 110 of a rear differential 107 and have outside diameters which are smaller than a largest outside diameter D1 of the differential case 110.

Because of this, the differential case 110 is formed of a rotational member which includes the portions 110g, 110h and has a portion 110d which supports a pinion gear shaft 111 at an axially central portion thereof, the rotational member additionally having portions 110e, 110f where ball bearings 86, 87 are mounted at axial end portions thereof and being formed symmetrical relative to a rotational axis O and an axis L.

An outside diameter D1 of the portion 110d is set to a largest dimension in outside diameters of outer circumferential portions on the differential case 110.

The portion 110e is disposed on one axial side of the portion 110d, and the portion 110f is disposed on the other axial side of the portion 110d. An outside diameter D2 of the portion 110e is set to a dimension which is smaller than an outside diameter D3 of the portion 110f (D3 > D2). The outside diameter D2 of the portion 110e and the outside diameter D3 of the portion 110f are both set to the dimensions which are smaller than the outside diameter D1 of the portion 110d (D1 > D3 > D2).

The portions 110g, 110h are disposed in line in the axial direction (the rotational axis O) of the differential case 110. Additionally, the portion 110g is interposed between the portion 110d and the portion 110e, and the portion 110h is interposed between the portion 110d and the portion 110f. Outside diameters of the portions 110g, 110h are substantially equal (referred to as D4) and are set to a dimension which is larger than the outside diameters D2, D3 (D3<D4) but is smaller than the outside diameter D1 (D1 > D3).

An external gear 110i which meshes with one transmission member 8 of transmission members is mounted on an outer circumferential portion of the portion 110g, and an external gear 110j which meshes with the other transmission member 9 is mounted on an outer circumferential portion of the portion 110h. A gear that employs the rotational axis O as a gear axis thereof and which has an involute tooth profile is used for the external gears 110i, 110j.

Connecting pins 11 are inserted through pin insertion holes 8a in the one transmission member 8, and the transmission member 8 is supported rotatably (so as to perform a circular motion) by the connecting pins 11 via a needle roller bearing 88. In addition, the eccentric cam (a first eccentric cam) 6 is disposed rotatably on an outer circumferential portion of the one transmission member 8 via a needle roller bearing 12. Additionally, the one transmission member 8 is restricted from moving in an axial direction towards the other transmission member 9 by a movement restricting member 98.

The connecting pins 11 are inserted through pin insertion holes 9a in the other transmission member 9, and the transmission member 9 is supported rotatably (so as to perform a circular motion) by the connecting pins 11 via a needle roller bearing 88. In addition, the eccentric cam (a second eccentric cam) 7 is disposed rotatably on an outer circumferential portion of the other transmission member 9 via a needle roller bearing 12. Additionally, the other transmission member 9 is restricted from moving in an axial direction towards the one transmission member 8 by a movement restricting member 99.

In the motor driving force transmission device 90 which is configured in this way, when an electric motor 82 is driven by supplying electric power to the electric motor 82, the motor driving force of the electric motor 82 is imparted to a speed reduction and transmission mechanism 2 via a connecting cylinder 10, whereby the speed reduction and transmission mechanism 2 operates in a similar way to the way in which the motor driving force transmission device 80 described in the third embodiment operates.

### [Advantage of the Fourth Embodiment]

According to the fourth embodiment that has been described heretofore, the following advantages will be obtained.

(1) The eccentric cams 6, 7 are disposed on the outer circumferential portion of the differential case 110 at the outer circumferences of the portions 110g, 110h whose outside diameters D4 are smaller than the largest outside diameter D1 of the differential case 110, whereby the radial dimension of the motor driving force transmission device 90 can be reduced, thereby making it possible to realize a reduction in size of the device in the radial direction. In this case, the reduction in size of the device in the radial direction is enabled by disposing the speed reduction and transmission mechanism 2 by making use of space portions (so-called dead spaces) which are situated on both axial sides of the portion 110d of the differential case 110, and therefore, this size reduction is attained by avoiding the enlargement of the motor driving force transmission device 90 in the axial direction.

(2) The ball bearings 86, 87 can be disposed at the portions 110e, 110f whose outside diameters D2, D3 are smaller than the outside diameters D4 of the portions 110g, 110h, and therefore, the ball bearings 86, 87 can be made small in size, thereby making it possible to realize a reduction in production costs.

(3) A rotor 82b is disposed on an outer circumference of a stator 82a of the electric motor 82, and therefore, similar to the advantage described in the third embodiment, a larger motor driving force can be produced than when the rotor is disposed on the inner circumference of the stator.

Thus, while the motor driving force transmission device of the invention has been described based on the embodiments thereof, the invention is not limited to the embodiments that have been described, and hence, the invention can be carried out in various forms without departing from the spirit and scope thereof. For example, the following modifications are also possible.

(1) In the embodiments (the first embodiment and the second embodiment), while the first electric motor 3 and the second motor 4 are switched to be driven alternately when the predetermined period of time elapses, the invention is not limited thereto. The electric motors may be switched to be driven alternately when the integral value of the motor current of the first electric motor or the second electric motor reaches or exceeds a predetermined threshold. Additionally, the electric motors may be switched to be driven alternately when the temperature of the first electric motor or the second electric motor reaches or exceeds a predetermined threshold or when the rotational speed of the first electric motor or the second electric motor reaches a predetermined threshold.

(2) In the embodiments, the one eccentric cam 6 and the other eccentric cam 7 are described as being installed on the inner circumferential surface of the second connecting member (the connecting cylinder) 10 so that the distance from the center point O1 of the through hole 6a to the rotation axis O equals the distance from the center point 02 of the through hole 7a to the rotational axis O and that the point O1 and the point 02 are spaced equidistantly apart from each other around the rotational axis O, and the pair of transmission members 8, 9 (the transmission members 72, 73) are described as being provided on the rear differential 107 at the portions which are spaced equidistantly (180°) apart from each other around the rotational axis. However, the invention is not limited thereto, and the number of transmission members can be changed as required. Namely, when the number of transmission members is n (n ≥ 3), assuming that a center point of a through hole of a first eccentric cam, a center point of a through hole of a second eccentric cam, ... and a center point of a through hole of an nth eccentric cam are disposed sequentially in one direction around the rotational axis of the second connecting member on an imaginary plane which intersects the rotational axis of the second connecting member (the rotational axis of the rear differential) at right angles, the eccentric cams are installed on the inner circumferential surface of the second connecting member so that distances from the center points of the through holes to the rotational axis equal each other and that an included angle which is formed by lines which connect the center points of the through holes of any two adjacent eccentric cams of the first eccentric cam, the second eccentric cam, ... and the nth eccentric cam and the rotational axis of the second connecting member is 360°/n, and the n transmission members are provided on the rear differential at portions which are spaced apart from each other at angular intervals of 360°/n around the rotational axis thereof. For example, in the case of three transmission members being provided, assuming that a center point of a first eccentric cam, a center point of a through hole of a second eccentric cam and a center point of a through hole of a third eccentric cam are disposed sequentially in one direction around the rotational axis of the second connecting member on the imaginary plane which intersects the rotational axis of the second connecting member, the three transmission members are installed on the inner circumferential surface of the second connecting member so that distances from the center points of the through holes to the rotational axis of the second connecting member equal each other and that an included angle which is formed by lines which connect the center points of the through holes of any two adjacent eccentric cams of the first eccentric cam, the second eccentric cam and the third eccentric cam and the rotational axis of the second connecting member is 120°, and the three transmission members are provided on the rear differential at portions which are spaced apart from each other at angular intervals of 120° around the rotational axis thereof.

(3) In the embodiments described above, while the invention is described as being applied to the four-wheel-drive vehicle 101 which employs the engine 102 and the electric motors 3, 4 in parallel as the drive source, the invention is not limited thereto, and hence, the invention can also be applied to an electric vehicle which employs only an electric motor as a drive source in a similar way to the way in which the embodiments are carried out.

(4) In the embodiments described above, while the invention is described as being applied to the four-wheel-drive vehicle 101 in which the front wheels 104 are driven by the engine 102 which is mounted at the front and the rear wheels 105 are driven by the electric motor (the first electric motor 3 and the second electric motor 4 in the first and second embodiments and the electric motor 82 in the third and fourth embodiments) which is mounted at the rear of the vehicle, the invention is not limited thereto, and hence, the invention can also be applied to a four-wheel-drive vehicle in which rear wheels are driven by an engine which is mounted at the front and front wheels are driven by an electric motor which is mounted at the rear of the vehicle.

### Industrial Applicability

According to the invention, the radial dimension of the device main body can be reduced, thereby making it possible to realize a reduction in size of the device in the radial direction.

This patent application is based on Japanese Patent Application No. 2011-3349 filed on January 11, 2011, Japanese Patent Application No. 2011-32206 filed on February 17, 2011, Japanese Patent Application No. 2011-73852 filed on March 30, 2011, Japanese Patent Application No. 2011-256577 filed on November 24, 2011, and Japanese Patent Application No. 2011-280033 filed on December 21, 2011, the contents of which are incorporated herein by reference.

### Description of Reference Numerals

1 motor driving force transmission device; 2 speed reduction and transmission mechanism; 3 first electric motor; 3a stator; 30a stator core; 300a tee; 31a coil; 3b rotor; 30b rotor core; 31b segment magnet; 4 second electric motor; 4a stator; 40a stator core; 400a tee; 41a coil; 4b rotor; 40b rotor core; 41b segment magnet; 5 ECU; 6, 7 eccentric cam; 6a, 7a through hole; 8, 9 transmission member; 8a, 9a pin insertion hole; 10 connecting cylinder; 11 connecting pin; 12 needle roller bearing; 13 nut; 71 speed reduction and transmission mechanism; 72, 73 transmission member; 80 motor driving force transmission device; 81 housing; 810 first housing element; 810a shaft insertion hole; 810b bearing mounting portion; 810c attaching flange; 810d pin mounting hole; 811 second housing element; 811a shaft insertion hole; 811b first rising portion; 8110b bearing mounting portion; 811c second rising portion; 8110c bearing mounting portion; 82 electric motor; 82a stator; 82b rotor; 83 stator supporting member; 83a shaft insertion hole; 83b flange; 830b bearing mounting portion; 831b pin mounting hole; 84 attaching bolt; 85, 86, 87 ball bearing; 88 needle roller bearing; 90 motor driving force transmission device; 98, 99 movement restricting member; 115 cover; 115a cylindrical portion; 116 seal member; 117 cover; 117a cylindrical portion; 118 seal member; 101 four-wheel-drive vehicle; 102 engine; 103 transaxle; 104 front wheel; 105 rear wheel; 106 differential carrier; 107 rear differential; 108 rear axle shaft; 109 front axle shaft; 110 differential case; 110a accommodating space; 110b shaft insertion hole; 110c external gear; 110d, 110e, 110f, 110g, 110h portion; 110i, 110j external gear; 111 pinion gear shaft; 112 pinion gear; 113 side gear; 114 tapered roller bearing; a first motor driving force, b second motor driving force, D1, D2, D3, D4 outside diameter; O rotational axis; O1, 02 point (axis); L axis; δ, δ1, δ2 deviation amount.

## Claims

1. A motor driving force transmission device comprising:
an electric motor which is configured to produce a motor driving force for operating a differential mechanism; and
a speed reduction and transmission mechanism which is configured to reduce speed of the motor driving force of the electric motor to transmit to the differential mechanism,
wherein
the speed reduction and transmission mechanism includes: an eccentric cam which is configured to rotate as the electric motor is driven; and a transmission member which is configured to rotate as the eccentric cam rotates, and the speed reduction and transmission mechanism is disposed on an outer circumference of the differential mechanism.

2. The motor driving force transmission device according to Claim 1, wherein
the electric motor is disposed on the outer circumference of the differential mechanism.

3. The motor driving force transmission device according to Claim 1 or 2, wherein
the electric motor includes: a stator which is fixed to a device main body; and a rotor which is configured to rotate around an outer circumference of the stator.

4. The motor driving force transmission device according to any of Claims 1 to 3, wherein
the electric motor includes: a first electric motor which is configured to produce a first motor driving force; and a second electric motor which is connected to the first electric motor and is configured to produce a second motor driving force, the first electric motor and the second electric motor being connected to the differential mechanism via the speed reduction and transmission mechanism.

5. The motor driving force transmission device according to Claim 4, wherein
in the speed reduction and transmission mechanism, the eccentric cam includes a plurality of eccentric cams which are configured to rotate as at least one of the first electric motor and the second electric motor is driven, and the transmission member includes a plurality of transmission members which are configured to rotate as the plurality of eccentric cams rotate.

6. The motor driving force transmission device according to Claim 5, wherein
in the speed reduction and transmission mechanism, the plurality of transmission members are provided on the differential mechanism at portions which are spaced apart from each other at equal intervals around a rotational axis of the differential mechanism.

7. The motor driving force transmission device according to any of Claims 1 to 6, wherein
in the speed reduction and transmission mechanism, the plurality of transmission members include internal gears which are configured to mesh with an input member of the differential mechanism via external gears.

8. The motor driving force transmission device according to any of Claims 1 to 7, wherein
in the speed reduction and transmission mechanism, the plurality of eccentric cams are disposed around an outer circumference of a portion of an outer circumferential portion of the input member of the differential mechanism, the portion having an outside diameter smaller than a largest outside diameter of the differential mechanism.

9. The motor driving force transmission device according to Claim 8, wherein
in the speed reduction and transmission mechanism, the plurality of eccentric cams are: a first eccentric cam which is positioned on one axial side of an axial central portion of the input member; and a second eccentric cam which is positioned on the other axial side of the axial central portion of the input member, the first eccentric cam and the second eccentric cam being disposed in line in an axial direction of the input member.
